(19) Europäisches Patentamt
European Patent Office
Office européen des brevets

(11) Veröffentlichungsnummer : **0 384 251 B1**

(12) **EUROPÄISCHE PATENTSCHRIFT**

(45) Veröffentlichungstag der Patentschrift :
**23.12.92 Patentblatt 92/52**

(51) Int. Cl.$^5$ : **A01N 65/00,** A01N 47/22

(21) Anmeldenummer : **90102643.5**

(22) Anmeldetag : **10.02.90**

(54) **Schneckenköder.**

(30) Priorität : **24.02.89 DE 3905793**

(43) Veröffentlichungstag der Anmeldung :
**29.08.90 Patentblatt 90/35**

(45) Bekanntmachung des Hinweises auf die Patenterteilung :
**23.12.92 Patentblatt 92/52**

(84) Benannte Vertragsstaaten :
**BE DE FR GB NL**

(56) Entgegenhaltungen :
**DE-A- 3 706 358**

(73) Patentinhaber : **BAYER AG**
**W-5090 Leverkusen 1 Bayerwerk (DE)**

(72) Erfinder : **Lein, Karl-Alfred, Dr.**
**An der Schule 2**
**W-3352 Einbeck (DE)**
Erfinder : **Schnorbach, Hans-Jürgen, Dr.**
**Gerstenkamp 19**
**W-5000 Köln 80 (DE)**
Erfinder : **Antfang, Elmar, Dr.**
**Hasenstrasse 32**
**W-4019 Monheim (DE)**
Erfinder : **Baron, Gerhard, Dipl.-Ing.**
**Kurt-Schumacher-Ring 14**
**W-5090 Leverkusen 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 384 251 B1

Jouve, 18, rue Saint-Denis, 75001 PARIS

## Beschreibung

Die vorliegende Erfindung betrifft neue Schneckenköder, ein Verfahren zur Herstellung dieser Köder und deren Verwendung zur Bekämpfung von Schnecken.

Es ist bereits bekannt geworden, Bodenschädlinge wie Schnecken mit Hilfe von Materialgemischen zu bekämpfen, die im wesentlichen aus Wirkstoff und Fraßstoff bestehen und durch Kompaktierung, insbesondere Pelettierung eines Gemisches aus Wirkstoff und Fraßstoff hergestellt werden. Diese Köder besitzen im allgemeinen einen Durchmesser bzw. eine Länge von 2-5 mm.

Es sind handelsübliche Schneckenköder auf Basis Weizenmehl, Weizenkleie, weiteren Zusatzstoffen sowie Mercaptodimethur als moluskiziden Wirkstoff bekannt. Diese Produkte locken durch die spezielle Zusammensetzung der Formulierung die Schnecken an und töten danach die Tiere durch den aufgenommenen Wirkstoff mit dem Ködermaterialien ab. Im Vergleich zu diesen handelsüblichen Ködern besitzen die vorliegenden erfindungsgemäßen Schneckenköder eine wesentliche bessere Lockwirkung.

Es wurde nun gefunden, daß Schneckenköder folgender Zusammensetzung:

A) Geschrotete und/oder ausgepreßte Teile von Pflanzen der Arten Cruciferae, Tropaeolum oder Caprifoliaceae

B) molluskizider Wirkstoff

C) Bindemittel und

gegebenenfalls

D) Zusatzstoffe,

neben einer hohen schneckenabtötenden Wirksamkeit eine überraschend stark ausgeprägte Lockwirung gegenüber Schnecken besitzen. Dadurch werden mehr Köder von Schnecken gefunden und aufgenommen.

Ein wesentlicher Vorteil der erfindungsgemäßen Schneckenköder besteht darin, daß sie in Anwesenheit von Wasser (hohe Luftfeuchtigkeit und/oder Bodenfeuchte) leicht flüchtige Geruchsstoffe freisetzen, die Schnecken auch über längere Entfernungen anlocken. Diese starke Lockwirkung war insofern überraschend, als zunächst vermutet werden konnte, daß eher eine toxische oder abstoßende Wirkung gegen Schnecken und auch gegen andere Schädlinge eintreten sollte. Weiterhin ist überraschend, daß die Bodenfeuchte im Gegensatz zu den vorgenannten Ködern des Standes der Technik die Wirksamkeit im Sinne einer Lockwirkung initiiert und verstärkt. Durch die Kombination der obengenannten Bestandteile A), B), C) und gegebenenfalls D) werden neue Schneckenköder bereitgestellt, welche dem bisher bekannten im überraschenden Maße überlegen sind.

Als geschrotete und/oder ausgepreßte Teile von Pflanzen der Arten Cruciferae, Tropaeolum und Caprifoliaceae kommt vorzugsweise Pflanzenmaterial (insbesondere Samen) zum Einsatz, das nach der Ölextraktion als sogenanntes Extraktionsschrot oder Preßkuchen vorzugsweise bei Raps, Rübsen, Senfarten und Crambe zur Verfügung steht. Die Preßrückstände sollen jedoch nicht durch eine Hitzedenaturierung Enzymaktivitäten verlieren. Insbesondere wird in dem erfindungsgemäßen Schneckenköder Rapsschrot als Komponente A eingesetzt.

Die geschroteten und/oder ausgepreßten Teile von Pflanzen der Arten Cruciferae, Tropaeolum und Caprifoliaceae (im folgenden Komponente A genannt) besitzen vorzugsweise eine Teilchengröße von 0,01 bis 3 mm und insbesondere von 0,1 bis 0,5 mm.

Die Komponente A dient in den erfindungsgemäßen Schneckenködern als kombiniertes Fraß- und Trägermaterial. In den erfindungsgemäßen Präparationen sind vorzugsweise 30 bis 85 Gew.-% und insbesondere 50 bis 70 Gew.-% Komponente A enthalten.

Als molluskizide Wirkstoffe (Komponente B) werden in den erfindungsgemäßen Schneckenködern chemische Verbindungen folgender Wirkstoffgruppen eingesetzt:

Carbamate, Phosphorsäureester, Pyrethroide, Nitromethylen-Verbindungen, Nitroimino-Verbindungen, Naturstoffe mit molluskiziden Eigenschaften, Metaldehyd, Kupfersulfat, Kupferchlorid, Niclosamid.

Zur Bekämpfung von Landschnecken werden bevorzugt eingesetzt:

1. Die folgenden Carbamate: Mercaptodimethur, Thiodicarb, Trimethacarb, Chloethocarb.
2. Die Verbindungen: Metaldehyd, Kupfersulfat und Kupferchlorid.

Besonders bevorzugt wird Mercaptodimethur (= N-Methyl-O-(3,5-dimethyl-4-methylthio-phenyl)-carbamat) eingesetzt.

Die erfindungsgemäßen Schneckenköder besitzen einen Wirkstoffgehalt von 0,1 bis 10 Gew.-% und vorzugsweise von 1 bis 5 Gew.-%.

Die erfindungsgemäßen Schneckenköder besitzen im allgemeinen einer Durchmesser bzw. eine Länge von 1 bis 10 mm, bevorzugt von 1,5 bis 3,5 mm.

Als Bindemittel kommen vorzugsweise organische Substanzen mit Klebewirkung in Frage wie z.B. Melasse oder organische Kleber, die im Gemisch Schnecken in der Aufnahme von Fraßmittel und Wirkstoff nicht beeinträchtigen. Als geeignete Bindemittel seien weiterhin genannt: Methylcellulose, Poly-vinylpyrrolidon, Polyvinylalkohol, Polyvinylacetat, Polyvinylether, Polyethylenglykole, Polyacrylate, Polyethylenoxide, natürliche Wachse (pflanzlichen, tierischen oder mineralischen Ursprungs), chemisch veränderte Wachse und synthetische Wachse (Polyethylenwachse), Polymethacrylate, Polypropylenglykole, Polybutene, Zucker, Dextrin, Stärke, Alginate, Ligninsulfonate, Gummiarabicum, veredelte Produkte aus Kolophonium und Ölen, Nitrolacke und Kunstharzlacke auf Basis von z.B. Alkydharzen, Chlorkautschukverbindungen, Harnstoff-Formaldehyd-Harzen, Epoxidharzen, Polyesterharzen, Polyurethanen, Phenolharzen, Aminharzen, chloriertem Polypropylen, Cyclokautschukverbindungen, Latices und Ketonharzen, u.a.

Insbesonders bevorzugt sind Stärke, Melasse, Harnstoff-Formaldehyd-Harze und folgende organische Kleber: Methylcellulose, Polyvinylacetat, Polyvinylpyrrolidon, Polyacrylate und Polymethacrylate.

Als Zusatzstoffe, die in den erfindungsgemäßen Ködern enthalten sein können, kommen vorzugsweise Konservierungsmittel, Farbstoffe, Warmblütler-Repellents sowie Wasser und organische Solventien in Frage.

Als Beispiele für gegebenenfalls vorhandene Konservierungsmittel seien 2-Hydroxydiphenyl, Sorbinsäure, p-Hydroxybenzaldehyd, p-Hydroxybenzoesäuremethylester, Benzaldehyd, Benzoesäure, p-Hydroxybenzoesäurepropylester, tert.-Butylhydroxytoluol und p-Nitrophenol genannt. Als Farbstoffe, die gegebenenfalls als Zusatzstoffe in Betracht kommen, seien anorganische Pigmente, wie Eisenoxid, Titandioxid und Ferrocyanblau und organische Farbstoffe, wie Anthrachinon-, Azo- und Metallphthalocyaninfarbstoffe aufgeführt.

Als Warmblütler-Repellents, die eine abweisende Wirkung auf warmblütige Lebewesen, wie Hunde und Igel, ausüben, können alle üblichen für diesen Zweck geeigneten Komponenten eingesetzt werden. Beispielhaft genannt sei Nonylsäurevanillylamid und Bitreol (Denatonium Benzoate).

Als organische Solventien kommen die für die Herstellung von Ködern verwendbaren Lösungsmittel in Frage. Vorzugsweise in Betracht kommen niedrig siedende Solventien, wie Methanol, Ethanol, Isopropanol, Butanol und Methylenchlorid.

Die erfindungsgemäßen Schneckenköder werden hergestellt, indem man die Komponente A (geschrotete und/oder ausgepreßte Teile von Pflanzen der Arten Cruciferae, Tropaeolum oder Caprifoliaceae) in einen Mischer gibt und nacheinander mit Bindemittel C) gegebenenfalls im Gemisch mit einem Lösungsmittel versetzt und mit mindestens einem molluskiziden Wirkstoff B), gegebenenfalls Zusatzstoff D) und gegebenenfalls weiterem Bindemittel C) innig vermischt (vorzugsweise mit Hilfe eines Rührers oder Kneters) und anschließend kompaktiert (vorzugsweise verpreßt, insbesondere über eine Matrizenpresse). Nach dem Abkühlen und Trocknen wird abgesiebt, wobei man eine gebrauchsfertige Schneckenköder-Formulierung erhält.

Der molluskizide Wirkstoff B) kann gegebenenfalls auch im Form einer Vormischung mit Zusatzstoffen, wie z.B. hochdisperser Kieselsäure zugegeben werden.

Bei der Herstellung der erfindungsgemäßen Schneckenköder werden, bezogen auf die Endformulierung vorzugsweise 30 bis 85 Gew.-%, insbesondere 50 bis 70 Gew.-% geschrotete und/oder ausgepreßte Teile von Pflanzen der Arten Cruciferae, Tropaeolum oder Caprifoliaceae, vorzugsweise 0,1 bis 10 Gew.-%, insbesondere 1 bis 5 Gew.-% molluskizider Wirkstoff, vorzugsweise 1 bis 50 Gew.-%, insbesondere 5 bis 40 Gew.-% Bindemittel und gegebenenfalls vorzugsweise 0,5 bis 10 Gew.-%, insbesondere 1 bis 5 Gew.-% weitere Zusatzstoffe D) eingesetzt.

Das erfindungsgemäße Verfahren wird im allgemeinen bei Raumtemperatur durchgeführt.

Die erfindungsgemäßen Schneckenköder lassen sich, wie oben bereits erwähnt, sehr gut zur Bekämpfung von Schadschnecken verwenden. Zu den Schnecken gehören alle landlebenden Nackt- und Gehäuseschnecken, welche in der Mehrzahl als polyphage Schädlinge landwirtschaftlicher und gärtnerischer Kulturen auftreten. Wichtige derartige Schädlinge sind Nacktschnecken wie Arion rufus (große Wegschnecke), Arion ater und andere Arionidae, Limax-Arten, ferner Ackerschnecken, wie Deroceras reticulatum und agreste aus der Familie Limacidae, sowie Arten aus der Familie Milacidae, und außerdem Gehäuseschnecken, wie solche der Gattungen Bradybaena, Cepaea, Cochlodina, Discus, Euomphalia, Galba, Helicigona, Helix, Helicella, Helicodiscus, Lymnaea, Opeas, Vallonia und Zonitoides.

Bei der Bekämpfung von Bodenschädlingen kann die Aufwandmenge an erfindungsgemäßen Ködertypen innerhalb eines größeren Bereichs variiert werden. Im allgemeinen verwendet man zwischen 2 und 15 kg Schneckenköder pro Hektar, vorzugsweise zwischen 3 und 10 kg pro Hektar.

Die erfindungsgemäßen Schneckenköder können nach üblichen Methoden, wie z.B. durch Streuen, ausgebracht werden.

Die Herstellung und die Verwendung der erfindungsgemäßen Schneckenköder geht aus folgenden Beispielen hervor:

I. Herstellungsbeispiel

In einem Mischer werden nacheinander 38,95 kg Rapsschrot (Verhältnis entölter : nicht entölter Rapsschrot = 65:35), 2,62 kg fein gemahlene Vormischung, die 2,1 kg N-Methyl-O-(3,5-dimethyl-4-methylthio-phenyl)-carbamat (Mercapodimethur) der Formel

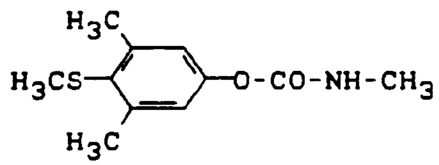

neben 0,52 kg hochdisperser Kieselsäure enthält,
4,65 kg kalt vernetzende Maisstärke,
0,54 kg Harnstoff-Formaldehyd-Harz,
0,10 kg Isopropanol,
3,00 kg Zuckerrübenmelasse und
0,14 kg blauer Farbstoff (1,4-Diisobutylamino-anthrachinon)

gegeben und innig vermischt. Anschließend wird über eine Matrizenpresse verpreßt. Man läßt abkühlen, trocknen und siebt Feinteile über ein 0,5 mm Sieb ab.

Man erhält eine gebrauchsfertige Schneckenköder-Formulierung.

An Stelle der vorgenannten Verpressung über eine Matrizenpresse kann auch eine andere übliche Kompaktierung zum Erhalt der Schneckköder-Formulierung durchgeführt werden.

| | |
|---|---|
| Teilchendurchmesser: | 2-2,5 mm |
| Wirkstoffgehalt: | 4,2 Gew.-% Mercaptodimethur. |

II. Verwendungsbeispiele

A) Beschreibung des bei den Versuchen eingesetzten Vergleichsproduktes

Als Vergleichsprodukt wurde in den Versuchen ein handelsüblicher den Wirkstoff Mercaptodimethur enthaltender Schneckenköder eingesetzt. Dieses Präparat ist ein Köder aus Weizenmehl, Weizenkleie, Zusatzstoffen und 4 % Wirkstoff Mercaptodimethur. Das Produkt lockt durch die spezielle Zusammensetzung der Formulierung die Schnecken an und tötet danach die Tiere durch den aufgenommenen Wirkstoff mit den Ködermaterialien ab.

B) Beschreibung der Lockwirkung und der Mortalität

Bei der Schneckenbekämpfung ist es sehr wichtig, daß die Schnecken von der zu schützenden Pflanze zum Köder gelockt und anschließend durch die Kontakt- und Fraßtätigkeit getötet werden. Es entsteht dabei ein Konkurrenzverhalten zwischen Pflanze und Köder, wobei für eine erfolgreiche Bekämpfung die Lockwirkung des Köders stärker sein muß als die der Pflanze.

Als Standard wurde das oben beschriebene handelsübliche Schneckenkorn auf Basis Mercaptodimethur eingesetzt, das sich durch eine wirsame Bekämpfung und auch durch eine gute Lockwirkung in der Praxis bewährt hat. Aus diesem Grunde wurde bei den Prüfungen die Anzahl der Schnecken auf der Vergleichsparzelle handelsübliches Schneckenkorn (Mesurol® 4 RB = Wirkstoff Mercaptodimethur) mit 100 % bewertet und die gezählten Schnecken in der Prüfparzelle wie folgt verrechnet.

$$\text{Lockwirkung (in \%)} = \frac{\text{Anzahl Schnecken Prüfparzelle}}{\text{Anzahl Schnecken Vergleichsparzelle}} \times 100$$

Bei der Mortalität wurde der Wirkungsgrad ermittelt, indem man die toten und die lebenden Tiere nach der Standardmethode verrechnete.

$$\text{Wirkungsgrad} = \frac{\text{Anzahl tote Schnecken}}{\text{Gesamtzahl Schnecken}} \times 100$$

(= Mortalitätsrate in Prozent)

Ergebnis der Vergleichsversuche: bei etwa gleicher Mortalitätsrate besitzen die erfindungsgemäßen Präparationen eine deutlich stärkere Lockwirkung als das handelsübliche Schneckenkorn auf Basis

Mercaptodimethur. Das bedeutet, daß infolge der wesentlich stärker ausgeprägten Lockwirkung der erfindungsgemäßen Köder bei vergleichbarer Mortalitätsrate pro Flächeneinheit zahlenmäßig mehr Schnecken abgetötet werden als beim handelsüblichen Schneckenkorn auf Basis Weizenmehl/Weizenkleie.

| Präparat | Mortalität<br>Aufwandmenge Präparat $g/m^2$ | Aufwandmenge Wirkstoff $g/m^2$ | Mortalitätsrate nach 4 Tagen in % |
|---|---|---|---|
| Handelsübliches Schneckenkorn auf Basis Mercaptodimethur (Standard) | 0,3 | 0,012 | 97 |
| Schneckenkorn gemäß Beispiel 1 der vorliegenden Anmeldung | 0,3 | 0,012 | 96 |

| Präparat | Lockwirkung | | | |
|---|---|---|---|---|
| | 1. + | 2. + | 3. + | 4. Tag |
| | abs./% | abs./% | abs./% | abs./% |
| Handelsübliches Schneckenkorn auf Basis Mercaptodimethur Aufwandmenge: 0,3 $g/m^2$ (Standard) | 354/100 | 533/100 | 592/100 | 666/100 |
| Schneckenkorn gemäß Beispiel 1 der vorliegenden Anmeldung Aufwandmenge: 0,3 $g/m^2$ | 450/130 | 679/127 | 799/135 | 899/135 |

**Patentansprüche**

1. Schneckenköder, dadurch gekennzeichnet, daß sie aus
   A) geschroteten und/oder ausgepreßten Teilen von Pflanzen der Arten Cruciferae, Tropaeolum und Caprifoliaceae
   B) mindestens einem molluskiziden Wirkstoff
   C) Bindemittel und
   gegebenenfalls
   D) Zusatzstoffen bestehen.

2. Schneckenköder gemäß Anspruch 1, dadurch gekennzeichnet, daß als Komponente A) geschrotete und/oder ausgepreßte Teile von Pflanzen der Art Cruciferae eingesetzt werden.

3. Schneckenköder gemäß Anspruch 1 oder 2, dadurch gekennzeichnet, daß als Komponente A) geschrotete und/oder ausgepreßte Teile von Rapspflanzen eingesetzt werden.

4. Schneckenköder gemäß Anspruch 1 bis 3, dadurch gekennzeichnet, daß als molluskizider Wirkstoff B) N-Methyl-O-(3,5-dimethyl-4-methylthio-phenyl)-carbamat eingesetzt wird.

5. Schneckenköder gemäß Anspruch 1 bis 4, dadurch gekennzeichnet, daß sie Stärke, Melasse, Harnstoff-Formaldehyd-Harze oder organische Kleber als Bindemittel C) enthalten.

6. Schneckenköder gemäß Anspruch 1 bis 5, dadurch gekennzeichnet, daß sie Konservierungsmittel, Farbstoffe, Warmblütler-Repellants, Wasser oder organische Solventien als Zusatzstoffe D) enthalten.

7. Schneckenköder gemäß Anspruch 1, dadurch gekennzeichnet, daß sie bezogen auf die Endformulierung 30 bis 85 Gew.-% Komponente A), 0,1 bis 10 Gew.-% Komponente B), 1 bis 50 Gew.-% Komponente C) und gegebenenfalls 0,5 bis 10 Gew.-% Komponente D) enthalten.

8. Verfahren zur Herstellung von Schneckenködern, dadurch gekennzeichnet, daß man in einem Mischer geschrotete und/oder ausgepreßte Teile von Pflanzen der Arten Cruciferae, Tropaeolum oder Caprifoliaceae (Komponente A) gibt und nacheinander mit Bindemittel C), gegebenenfalls im Gemisch mit einem Lösungsmittel versetzt und mit mindestens einem molluskiziden Wirkstoff B), gegebenenfalls in Form einer Vormischung, gegebenenfalls Zusatzstoff D) und gegebenenfalls weiterem Bindemittel C) vermischt, kompaktiert, insbesondere verpreßt und nach dem Abkühlen und Trocknen absiebt.

9. Verfahren zur Herstellung von Schneckenködern gemäß Anspruch 8, dadurch gekennzeichnet, daß man, bezogen auf die Endformulierung
30 bis 85 Gew.-% Komponente A),
0,1 bis 10 Gew.-% Komponente B),
1 bis 50 Gew.-% Komponente C) und gegebenenfalls
0,5 bis 10 Gew.-% Komponente D) einsetzt.

10. Verwendung von Schneckenködern gemäß Anspruch 1 bis 7 zur Bekämpfung von Schadschnecken.

**Claims**

1. Slug baits, characterized in that they consist of
   A) meals of, and/or crushed, parts of plants of the species Cruciferae, Tropaeolum and Caprifoliaceae
   B) at least one molluscicidal active compound
   C) binders and
      if appropriate
   D) additives.

2. Slug baits according to Claim 1, characterized in that meals of, and/or crushed, parts of plants of the species Cruciferae are employed as component A).

3. Slug baits according to Claim 1 or 2, characterized in that meals of, and/or crushed, parts of oil seed rape plants are employed as component A).

4. Slug baits according to Claims 1 to 3, characterized in that O-(3,5-dimethyl-4-methylthiophenyl) N-methylcarbamate is employed as molluscicidal active compound B).

5. Slug baits according to Claims 1 to 4, characterized in that they contain starch, molasses, urea-formaldehyde resins or organic adhesives as binders C).

6. Slug baits according to Claims 1 to 5, characterized in that they contain preservatives, colorants, substances which act as repellents on warm-blooded animals, or water or organic solvents as additives D).

7. Slug baits according to Claim 1, characterized in that they contain 30 to 85% by weight of component A), 0.1 to 10% by weight of component B), 1 to 50% by weight of component C) and if appropriate 0.5 to 10% by weight of component D), based on the end formulation.

8. Process for the manufacture of slug baits, characterized in that meals of, and/or crushed, parts of plants of the species Cruciferae, Tropaeolum or Caprifoliaceae (component A) are introduced into a mixer and, in succession, binder C), if appropriate in a mixture with a solvent, is added and the mixture is mixed with at least one molluscicidal active compound B), if appropriate in the form of a premixture, if appropriate additive D) and if appropriate more binder C), compacted, in particular compressed, and, after cooling and drying, the product is separated by sifting.

9. Process for the manufacture of slug baits according to Claim 8, characterized in that 30 to 85% by weight of component A), 0.1 to 10% by weight of component B), 1 to 50% by weight of component C) and if appropriate 0.5 to 10% by weight of component D), based on the end formulation, are employed.

10. Use of slug baits according to Claims 1 to 7 for controlling harmful slugs.

## Revendications

1. Appâts pour gastropodes, caractérisés en ce qu'ils se composent
   A) de fragments broyés et/ou compressés de végétaux des espèces Crucifères, Oléagineux Tropiquaux et Caprifoliacés
   B) d'au moins un principe actif molluscicide
   C) d'un liant et
   le cas échéant
   D) d'additifs.

2. Appâts pour gastropodes selon la revendication 1, caractérisés en ce que sont utilisés comme composant A) des fragments broyés et/ou compressés de végétaux de l'espèce Crucifères.

3. Appâts pour gastropodes selon la revendication 1 ou 2, caractérisés en ce que sont utilisés comme composant A) des fragments broyés et/ou compressés de colza.

4. Appâts pour gastropodes selon les revendications 1 à 3, caractérisés en ce qu'est utilisé comme principe actif molluscicide B) du N-méthyl-O-(3,5-diméthyl-4-méthylthio-phényl)-carbamate.

5. Appâts pour gastropodes selon les revendications 1 à 4, caractérisés en ce qu'ils contiennent de l'amidon, de la mélasse, des résines urée-formaldéhyde ou des colles organiques comme liant C).

6. Appâts pour gastropodes selon les revendications 1 à 5, caractérisés en ce qu'ils contiennent des agents de conservation, des colorants, des produits exerçant un effet répulsif sur les animaux à sang chaud, de l'eau ou des solvants orcaniques comme additifs D).

7. Appâts pour gastropodes selon la revendication 1, caractérisés en ce qu'ils contiennent, par rapport à la formulation finale, 30 à 85 % en poids de composant A), 0,1 à 10 % en poids de composant B), 1 à 50 % en poids de composant C) et le cas échéant 0,5 à 10 % en poids de composant D).

8. Procédé de fabrication d'appâts pour gastropodes, caractérisé en ce qu'on introduit dans un mélangeur des fragments broyés et/ou compressés de végétaux des espèces Crucifères, Oléagineux Tropicaux ou Caprifoliacés (composant A) et qu'on mélange intimement avec successivement le liant C), mélangé le cas échéant à un solvant et avec au moins un principe actif molluscicide B), le cas échéant sous la forme d'un prémélange, le cas échéant un additif D) et le cas échéant un autre liant C), qu'on procède à un compactage, notamment à une compression et qu'on tamise après refroidissement et séchage.

9. Procédé de fabrication d'appâts pour gastropodes selon la revendication 8, caractérisé en ce qu'on utilise, par rapport à la formulation finale,
   30 à 85 % en poids de composant A),
   0,1 à 10 % en poids de composant B),
   1 à 50 % en poids de composant C) et le cas échéant
   0,5 à 10 % en poids de composant D).

10. Utilisation d'appâts pour gastropodes selon les revendications 1 à 7 pour lutter contre les gastropodes nuisibles.